# EUROPÄISCHE PATENTSCHRIFT

(11) **EP 3 549 805 B1**
(45) Veröffentlichungstag und Bekanntmachung des Hinweises auf die Patenterteilung: **19.05.2021**
(21) Anmeldenummer: 19155636.4
(22) Anmeldetag: 06.02.2019
(51) Int. Cl.: B60K 15/03

(54) **TANK SOWIE VERFAHREN ZUR KONSTRUKTION EINES TANKS**
TANK AND METHOD FOR CONSTRUCTING A TANK
RÉSERVOIR AINSI QUE PROCÉDÉ DE CONSTRUCTION D'UN RÉSERVOIR

(30) Priorität: 03.04.2018 DE 102018107814
(43) Veröffentlichungstag der Anmeldung: 09.10.2019
(73) Patentinhaber: CLAAS Selbstfahrende Erntemaschinen GmbH, 33428 Harsewinkel (DE)
(72) Erfinder: Nagelsmöller, Bernd, 33829 Borgholzhausen (DE); Steiner, Jens, 56269 Beckum (DE); Kersting, Thomas, 59302 Oelde (DE); Schlenski, Michael, 49536 Lienen (DE); Mennewisch, Stefan, 33775 Versmold (DE); Kühn, Jürgen, 32791 Lage (DE); Fränsing, Ralf, 33428 Harsewinkel (DE); Graefe, Lutz, 59555 Lippstadt (DE)
(74) Vertreter: CLAAS Gruppe

(56) Entgegenhaltungen:
- CN-U- 203 567 551
- DE-A1-102015 115 409
- JP-A- 2009 269 593
- US-A1- 2012 251 788
- US-A1- 2016 121 717
- RALF MESKE ET AL: "Topologie- und Gestaltoptimierung mit CAOSS und ABAQUS", INTERNET CITATION, 17. Mai 2005 (2005-05-17), XP002328332, Gefunden im Internet: URL:ABAQUS ANWENDERTREFFEN 2000, WINTERTHUR http://www.fe-design.de/fileadmin/publikat ionen/publikationen2000/2000-09-29_ABAQUS_ Anwendertreffen_Paper.pdf [gefunden am 2005-05-17]

## Beschreibung

Die vorliegende Anmeldung betrifft eine landwirtschaftliche Arbeitsmaschine mit einem Tank zur Lagerung einer Flüssigkeit gemäß dem Oberbegriff von Anspruch 1. Weiterhin betrifft die vorliegende Anmeldung ein Verfahren zur Konstruktion eines solchen Tanks.

Der Tank kann insbesondere dazu geeignet sein, flüssigen Kraftstoff zu lagern. Hierzu sind beispielsweise Benzin und Diesel zu nennen. Die vorliegende Erfindung betrifft aber auch Flüssigkeitstanks zur Lagerung anderer Flüssigkeiten. Zur Aufnahme der Flüssigkeit verfügt der Tank über einen Korpus, wobei zur Befüllung und Entnahme von Flüssigkeit der Korpus vorzugsweise mit einer Befüllungsöffnung und einer Entnahmeöffnung ausgestattet ist. Durch die Befüllungsöffnung hindurch ist ein Innenraum des Korpus mit der Flüssigkeit befüllbar, wobei der Korpus eine Mehrzahl von Seitenwandungen aufweist, mittels derer der Innenraum, vorzugsweise flüssigkeitsdicht, weiter vorzugsweise gasdicht, eingefasst ist. Dabei versteht es sich, dass eine jeweilige Dichtigkeit mittels Öffnen einer jeweiligen Öffnung des Korpus temporär aufgehoben ist. Die Befüllungsöffnung kann beispielsweise an einer Oberseite des Tanks angeordnet und mittels eines Schraubverschlusses verschließbar sein. Über die Entnahmeöffnung ist die Flüssigkeit aus dem Innenraum entnehmbar, wobei die Entnahmeöffnung insbesondere mit einem Entnahmeventil zusammenwirken kann. Die Entnahmeöffnung ist in aller Regel an einer tiefsten Stelle des Tanks angeordnet, sodass soweit möglich sämtliche Flüssigkeit über die Entnahmeöffnung aus dem Innenraum des Tanks entnehmbar ist. Die Befüllungsöffnung kann ihrerseits vorteilhafterweise mit einem Befüllstutzen ausgebildet sein, der dazu geeignet ist, mit einer Befüllungseinrichtung zusammenzuwirken. Diese kann beispielsweise von einem Tankrüssel gebildet sein. Analog hierzu wirkt die Entnahmeöffnung typischerweise mit einer Entnahmeeinrichtung zusammen, die beispielsweise von einer Schlauchleitung gebildet sein kann. Mittels dieser ist die Flüssigkeit aus dem Innenraum des Tanks entnehmbar und beispielsweise in Richtung einer Verbrennungskraftmaschine leitbar.

Unter einer "Seitenwandung" wird im Sinne der vorliegenden Anmeldung grundsätzlich ein flächig ausgebildeter Abschnitt des Korpus verstanden, entlang dessen sich eine Wandung des Korpus stetig erstreckt. Mithin wird eine Seitenwandung typischerweise von umlaufenden Seitenrändern eingefasst an denen die Wandung des Korpus gebogen oder geknickt ist, insbesondere zu einer anderen Seite des Korpus hin umschlägt. Eine grundsätzliche Notwendigkeit, dass eine Seitenwandung in sich eben ausgebildet ist, besteht gleichwohl nicht. Mithin kann eine jeweilige Seitenwandung auch geschwungen oder gekrümmt ausgebildet sein. In aller Regel ist jedoch zumindest eine Vielzahl von Seitenwandungen des Korpus eben ausgebildet. Grundsätzlich müssen Seitenwandungen des Korpus nicht jeweils eine gesamte Seite des Korpus bilden; stattdessen ist es ebenso denkbar, dass eine einzige Seite eines grundsätzlich kubisch ausgebildeten Tanks von einer Mehrzahl von Seitenwandungen gebildet ist, die beispielsweise durch langgestreckte Einbuchtungen voneinander getrennt sind. Derartige Einbuchtungen können beispielsweise zur Aufnahme eines Traggestells vorgesehen sein, mit dem der Tank an einer jeweiligen Arbeitsmaschine montierbar ist. Eine entsprechende Ausgestaltung ist auch bei dem erfindungsgemäßen Tank gemäß dem untenstehenden Ausführungsbeispiel verwirklicht.

Weiterhin verfügt der Tank vorteilhafterweise über eine Belüftungsöffnung, durch die hindurch insbesondere Luft aus dem Innenraum hin zu einer Umgebung des Tanks entweichen kann. Letzteres dient dazu, im Falle eines in dem Innenraum herrschenden Überdrucks eine Entlastung schaffen zu können. Typischerweise wirkt die Belüftungsöffnung mit einem entsprechenden (Überdruck-)Ventil zusammen.

Im Stand der Technik sind grundsätzlich bereits Kraftfahrzeuge mit einem Tank bekannt. Hierzu wird rein beispielhaft auf die Europäische Patentschrift EP 0 617672 B1 verwiesen.

Tanks werden insbesondere dann, wenn sie zur Lagerung von Kraftstoffen verwendet werden sollen, auf ihre Stabilität hin geprüft. Eine solche Prüfung kann insbesondere genormte Belastungszustände umfassen. Ein solcher Normbelastungszustand kann beispielsweise darin bestehen, den Innenraum des Tanks vollständig mit einer Flüssigkeit, beispielsweise Wasser, zu füllen, wobei die Flüssigkeit eine Temperatur von 65°C aufweist. Zudem wird ein Druck von bis zu 0,3 bar auf den Innenraum aufgebracht. Unter diesen Bedingungen muss bei bestimmungsgemäßer Lagerung des Tanks, das heißt insbesondere an seinen an dem Korpus vorgesehenen Lagerstellen, die Stabilität des Tanks gewährleistet sein, das heißt der Korpus des Tanks darf nicht mechanisch versagen. Insbesondere dürfen keine Leckagen auftreten.

Grundsätzlich ist die Konstruktion eines Tanks bzw. dessen Korpus im Hinblick auf das Bestehen einer solchen Prüfung als solches nicht übermäßig anspruchsvoll. Die Schwierigkeit besteht gleichwohl darin, den Tank in einer effizienten Weise zu konstruieren, sodass insbesondere seine Masse auf ein möglichst geringes Maß reduziert wird. Dies ist insbesondere wünschenswert, um den Tank im Zuge seiner Montage an der jeweiligen Arbeitsmaschine einfach handhaben zu können. Ferner wird aufgrund des geringeren Eigengewichts auch die Belastung des Korpus durch seine eigene Gewichtskraft reduziert. Weiterhin können die Herstellungskosten des Tanks bei geringerer Masse verringert werden.

Der vorliegenden Erfindung liegt mithin die Aufgabe zugrunde, eine landwirtschaftliche Arbeitsmaschine bereitzustellen, die einen in diesem Sinne besonders effizient konstruierten Tank aufweist, insbesondere einen Tank mit einem optimierten Verhältnis seiner Steifigkeit zu seiner Masse, dessen Herstellung möglichst einfach und kostengünstig möglich ist, sowie ein Verfahren zur Konstruktion des Tanks.

Die Aufgabe wird erfindungsgemäß mittels einer landwirtschaftlichen Arbeitsmaschine mit den Merkmalen des unabhängigen Anspruchs 1 sowie mit einem Verfahren mit den Merkmalen des unabhängigen Anspruchs 14 gelöst. Vorteilhafte Ausgestaltungen ergeben sich aus den abhängigen Unteransprüchen.

Die erfindungsgemäße Arbeitsmaschine ist dadurch gekennzeichnet, dass der Verlauf der Verstärkungsrippen basierend auf einem Ergebnis einer Topologieoptimierung mittels Finite Elemente Analyse ermittelt ist und wobei mindestens eine Seitenwandung, vorzugsweise mehrere Seitenwandungen, weiter vorzugsweise sämtliche Seitenwandungen, in ihrem Mittelbereich mindestens eine Verstärkungsrippe aufweist, die in Form einer ellipsenförmigen, in sich geschlossenen Ringrippe ausgebildet ist.Die Besonderheit liegt darin, dass ein Verlauf zumindest eines Teils der Verstärkungsrippen, vorzugsweise sämtlicher Verstärkungsrippen, basierend auf einem Ergebnis einer Topologieoptimierung des Tanks ermittelt ist.

Für die Ermittlung des Ergebnisses wird der Korpus vorzugsweise zumindest einem Normbelastungszustand ausgesetzt sowie an Lagerstellen zumindest statisch bestimmt, oder ggf. statisch überbestimmt, gelagert. Infolge des Normbelastungszustands wirken in dem Korpus Kräfte und es stellen sich Verformungen ein. Diese Parameter (sowie weitere) sind im Wege einer Finite Elemente Analyse, die Teil der Topologieoptimierung ist, ermittelbar. Die Verstärkungsrippen sind nunmehr erfindungsgemäß basierend auf dem Ergebnis der genannten Analyse angeordnet.

Eine Finite Elemente Analyse bzw. die Anwendung der Finite Elemente Methode sieht bei einem vorliegenden Gegenstand die Modellierung in einer Finite Elemente Software vor. Bei dem erfindungsgemäßen Tank werden dafür bevorzugt zumindest eine Geometrie des Korpus sowie dessen Lagerungsbedingungen vorgegeben. Weiterhin kann für den Tank ein Normbelastungszustand vorgegeben werden, der beispielsweise wie vorstehend beschrieben ausgestaltet ist.

Im Rahmen der Finite Elemente Analyse wird der simulierte Tank in eine endliche Anzahl von flächigen oder räumlichen, beispielsweise linearen oder quadratischen, Elementen unterteilt, an deren Knoten die Lösung für das sich aus gegebenen Randbedingungen (Geometrie, Belastung, Lagerung) ergebende Gleichungssystem bestimmt wird. Hierbei handelt es sich um eine numerische Lösung, die Ergebnisse lediglich an den Knoten ergibt, wobei zwischen den Knoten gewissermaßen eine Interpolation vorgenommen wird. Auf diese Weise lassen sich allgemein komplexeste Bauteile näherungsweise berechnen, das heißt insbesondere in dem Bauteil auftretende Verformungen, auftretende Dehnungen und/oder eine für die Dehnungen oder Verformungen aufzubringende Verformungsenergie etc.

Im Rahmen der Topologieoptimierung wird dann über die Finite Elemente Analyse hinaus eine Zielfunktion unter einer mathematischen Randbedingung vorgegeben. Vorzugsweise ist die Zielfunktion bei dem Tank eine Maximierung der Steifigkeit, unter der Randbedingung, dass die Masse des Tanks um einen festzulegenden Faktor, besonders bevorzugt 70 - 90%, verringert ist. Ergebniss der Topologieoptimierung ist eine Gewichtung der Elemente des Tanks bezüglich der Steifigkeit des Bauteils.

Anhand der Gewichtung ist grundsätzlich klar erkennbar, welche Elemente beziehungsweise Bereiche des Korpus infolge des Normbelastungszustands sowie unter den gegebenen Lagerungsbedingungen welchen Anteil an der Steifigkeit des Bauteils haben. Die Verstärkungsrippen sind nunmehr vorzugsweise in Bereichen an dem Korpus angeordnet, deren ermittelter Anteil an der Steifigkeit des Korpus groß ist.

Dabei ist es besonders bevorzugt, dass die Verstärkungsrippen zumindest teilweise in den Bereichen an dem Korpus angeordnet sind, in denen die größte Verformungsenergie am Korpus auftritt. Dabei dienen sie der Erhöhung des Flächenträgheitsmomentes der Seitenwandungen. Sie wirken daher einer Verformung des Korpus entgegen. Bei am Korpus angeordneten Verstärkungsrippen verformt sich der Korpus unter Normbelastung daher weniger stark als ein herkömmlicher Tank gleicher Wandstärke ohne Verstärkungsrippen.

Im Hinblick auf die Positionierung und Ausformung der Verstärkungsrippen an dem Korpus ist ein solcher Tank von besonderem Vorteil, bei dem die Verstärkungsrippen derart ausgebildet sind, dass eine Gesamtverformung des Korpus beim Normbelastungszustand möglichst klein ist. Dieser Normbelastungszustand kann vorzugsweise aus genau demjenigen bestehen, der im Zuge der Prüfung des Tanks gemäß entsprechender Normung durchgeführt wird. Wie bereits erläutert, wird hierfür der Innenraum des Tanks vollständig mit Flüssigkeit, insbesondere mit einer Temperatur von 65°C, gefüllt und sodann mit einem Druck von 0,3 bar beaufschlagt. Dieser Belastungszustand ist im Folgenden auch als Normbelastung oder Normbelastungszustand bezeichnet. Er ist zwecks verpflichtender Zulässigkeitsprüfung für einen Kraftstofftank üblich.

In einer bevorzugten Ausführungsform ist der Verlauf und/oder die Anordnung mindestens einer Verstärkungsrippe, insbesondere sämtlicher Verstärkungsrippen, des Tanks zudem unter Berücksichtigung seiner Herstellbarkeit und/oder seiner Herstellungskosten optimiert. Die Verstärkung des Korpus des Tanks wird daher nicht einfach durch insbesondere sich flächig erstreckende Bereiche mit einer, insbesondere proportional zu ihrem Anteil, vergrößerten oder verringerten Wandstärke realisiert. Weiterhin wird auch nicht einfach überall dort, wo der Anteil der Elemente an der Steifigkeit des Korpus am größten ist, die Wanddicke erhöht. Denn eine schlichtweg flächendeckende Erhöhung der Wandstärke des Korpus würde letztlich zu einem deutlichen Anstieg der Masse des Korpus führen, was der zugrundeliegenden Aufgabe der Bereitstellung eines effektiv konstruierten, kostengünstigen Tanks entgegenstehen würde. Sondern unter Abwägung aller Rahmenbedingungen wird anhand des ermittelten Ergebnisses aus der Topologieoptimierung ein Kompromiss aus möglichst kleinem Gewicht bei möglichst großer Steifigkeit, möglichst geringen Herstellungskosten und möglichst geringem Herstellungsaufwand gesucht. Es hat sich gezeigt, dass dabei das Anordnen von insbesondere linienförmig verlaufenden Verstärkungsrippen besonders vorteilhaft ist. Daher überdecken die Verstärkungsrippen die Bereiche größten Anteils der Elemente an der Steifigkeit des Korpus nicht nur nicht vollständig, sondern sie können stattdessen auch teilweise in Bereichen geringeren oder sehr geringen Anteils angeordnet sein.

Die erfindungsgemäße Arbeitsmaschine hat den Vorteil, dass es mittels der Verstärkungsrippen möglich ist, eine unter Normbelastung oder sogar unter einer Überlastung ausreichende Steifigkeit und/oder Stabilität des Korpus zu erzielen, wobei die Wandstärke und somit das Gewicht des Korpus gegenüber einem herkömmlichen Korpus ohne Verstärkungsrippen verringert ist. Im Ergebnis ist es mittels Anordnung der Verstärkungsrippen möglich, eine Gesamtmasse des Tanks um bis zu 30 % zu reduzieren. Dabei ist das Material des Korpus an Stellen konzentriert, an denen es unter mechanischen Gesichtspunkten benötigt wird, insbesondere in Bereichen, in denen der Anteil der Elemente an der Steifigkeit des Korpus groß oder am größten ist. Infolge dessen ist ein Verzicht auf Material insbesondere in Bereichen möglich, in denen der Anteil der Elemente an der Steifigkeit des Korpus am kleinsten oder zumindest geringer ist.

Daher ist eine solche landwirtschaftliche Arbeitsmaschine bevorzugt, bei der mindestens eine am Korpus angeordnete Verstärkungsrippe, vorzugsweise eine Mehrzahl von Verstärkungsrippen, an dem Korpus zumindest bereichsweise linienförmig ausgebildet ist. Dadurch wird ein flächiges Erhöhen der Wanddicke vermieden und der Materialaufwand sowie das Gewicht des Tanks geringgehalten.

Insbesondere hat sich gezeigt, dass sich Bereiche größter Anteile der Elemente an der Steifigkeit des Korpus an einem Knick oder einer Biegung im Bereich eines Seitenrandes zwischen zwei Seitenwandungen, insbesondere von einer Außenecke zu einer benachbarten Außenecke, erstreckt. Mittels zumindest einer, vorzugsweise mehrerer, über den jeweiligen Seitenrand "umschlagenden" Verstärkungsrippen kann die Stabilität des Korpus mit sehr geringem Materialaufwand verbessert werden. Besonders bevorzugt ist im Bereich eines Seitenrandes zwischen zwei Seitenwandungen, insbesondere im Bereich aller Seitenränder zwischen zwei Seitenwandungen, mindestens eine Verstärkungsrippe oder sind mehrere Verstärkungsrippen in einem Winkel, insbesondere quer, zum Seitenrand am Korpus des Tanks angeordnet. Die Verstärkungsrippen erstrecken sich daher am Seitenrand zwischen zwei Seitenwandungen nicht entlang der Bereiche größter Anteile der Elemente an der Steifigkeit des Korpus, sondern in dem Winkel, insbesondere quer, dazu. Dadurch kann trotz geringem Materialaufwand für die Verstärkungsrippen die Steifigkeit des Korpus sehr effektiv erhöht werden.

In einer bevorzugten Ausführungsform kann sich eine Verstärkungsrippe entlang mehrerer Seitenwandungen erstrecken, das heißt an einem Seitenrand einer Seitenwandung "umschlagen" und weiter entlang einer jeweils angrenzenden Seitenwandung verlaufen. Vorteilhafterweise erstreckt sich diese mindestens eine Verstärkungsrippe jeweils entlang jeder der Seitenwandungen. Prinzipiell kann sich dabei eine Wanddicke der Verstärkungsrippe in Richtung des sich verringernden Anteils des Bereiches an der Steifigkeit des Korpus verringern. Unter dem Gesichtspunkt des Kompromisses aus Materialaufwand oder Gewicht, Herstellungsaufwand und Herstellungskosten ist aber eine gleichbleibende Wanddicke der Verstärkungsrippe bevorzugt.

Erfindungsgemäß weist mindestens eine Seitenwandung in ihrem Mittelbereich mindestens eine Verstärkungsrippe auf, die in Form einer ellipsenförmigen, insbesondere kreisförmigen, in sich geschlossenen Ringrippe ausgebildet ist. Unter einem "Mittelbereich" einer Seitenwandung wird im Sinne der vorliegenden Erfindung ein solcher Bereich verstanden, der eine Mitte der jeweiligen Seitenwandung umschließt. Die Ringrippe weist dabei bevorzugt einen Abstand zur Mitte auf. Dabei ist es besonders bevorzugt, dass im Mittelbereich keine weitere Verstärkungsrippe vorgesehen ist. Die Mitte beschreibt dabei diejenige Stelle der Seitenwandung, an der der unter Belastung des Korpus auftretende Verformungsweg der Seitenwandung betragsmäßig am größten ist. Da die Ringrippe von der Mitte beabstandet ist, ist der zur Versteifung aufzubringende Materialaufwand hier sehr gering. Zudem kann die Wanddicke der Seitenwandung im Mittelbereich verringert werden, insbesondere im Vergleich zu einem herkömmlichen Tank gleicher Wandstärke ohne Verstärkungsrippen. Insgesamt sind der Materialaufwand für und das Gewicht des Tanks durch die Ringrippe daher stark verringert. Eine solche Ringrippe erstreckt sich dabei vorzugsweise in Richtung eines gleichbleibenden Anteils der Elemente an der Steifigkeit des Korpus.

Bei Verwendung mindestens einer vorstehend beschriebenen Ringrippe kann es weiterhin von besonderem Vorteil sein, dass sich ausgehend von einer jeweiligen Ringrippe eine Mehrzahl von Verstärkungsrippen radial, beispielsweise in Richtung auf Seitenränder der jeweiligen Seitenwandung zu, erstrecken. Diese Verstärkungsrippen erstrecken sich vorzugsweise zumindest abschnittsweise geradlinig entlang der Seitenwand.

In einer besonders vorteilhaften Ausführungsform verläuft zumindest eine Verstärkungsrippe von einer Ringrippe einer Seitenwandung zu einer Ringrippe einer benachbarten Seitenwandung. Ganz besonders bevorzugt verlaufen jeweils zumindest eine Verstärkungsrippe von einer Ringrippe jeder der Seitenwandungen jeweils zu einer Ringrippe ihrer benachbarten Seitenwandungen. Dadurch ist der Korpus im Wesentlichen umlaufend von Verstärkungsrippen umgeben.

In einer weiterhin vorteilhaften Ausgestaltung der erfindungsgemäßen Arbeitsmaschine ist mindestens eine Außenecke des Korpus, mittels mindestens einer Verstärkungsrippe eingefasst. Eine Außenecke des Korpus im Sinne der Erfindung ist eine nach außen gewölbte, etwa konvex geformte, Ecke des Korpus. An einer solchen Außenecke grenzen drei Seitenwandungen aneinander an. Diese Verstärkungsrippe ist in Form einer in sich geschlossenen Eckrippe ausgebildet. Vorteilhafterweise weist der Korpus an einer Mehrzahl, vorzugsweise an sämtlichen seiner Außenecken, jeweils mindestens eine solche Eckrippe auf. Aufgrund der großen Steifigkeit des Korpus an einer solchen Ecke ist die unter Normbelastung auftretende Verformung dort gering. Es hat sich gezeigt, dass an den Außenecken keine Verstärkung erforderlich ist.

Eine Geometrie des Korpus kann sich grundsätzlich aus verfügbarem Bauraum an einer jeweiligen Arbeitsmaschine ergeben. Insbesondere ist es üblich, einen Tank derart an eine Struktur der Arbeitsmaschine anzupassen, dass er den zur Verfügung stehenden Bauraum vorzugsweise vollständig ausnutzt. Um den Tank an einer Tragstruktur zu befestigen, werden dann rillenartige Einbuchtungen am Tank vorgesehen, in die der Tank einlegbar ist. Dadurch weisen Tanks für landwirtschaftliche Arbeitsmaschinen Innenecken auf.

In einer weiteren Ausgestaltung der erfindungsgemäßen Arbeitsmaschine ist bevorzugt in mindestens einer Innenecke des Korpus, insbesondere in allen Innenecken des Korpus, eine Verstärkungsrippe angeordnet. Eine Innenecke des Korpus im Sinne der Erfindung ist eine nach innen gewölbte, etwa konkav geformte Ecke des Korpus. Auch an einer solchen Innenecke grenzen drei Seitenwandungen aneinander an. Vorzugsweise ist die in der Innenecke angeordnete Verstärkungsrippe kreisförmig ausgebildet. Weiterhin bevorzugt verläuft sie entlang aller Seitenwandungen der Ecke.

Grundsätzlich ist eine Ausgestaltung des Tanks zu bevorzugen, bei der zumindest eine Mehrzahl der Verstärkungsrippen, vorzugsweise sämtliche Verstärkungsrippen, miteinander verbunden sind, das heißt insbesondere ineinander übergehen. Auf diese Weise sind ein Kraftfluss und eine Kraftleitung zwischen den Verstärkungsrippen möglich, sodass die Verstärkungsrippen in Summe gewissermaßen ein Skelett des Tanks bilden, entlang dessen Kräfte effektiv abgetragen werden können.

In diesem Zusammenhang ist es weiterhin von besonderem Vorteil und grundsätzlich von der übrigen Konstruktion des Tanks unabhängig, wenn der Tank einstückig ausgebildet ist. Insbesondere ist der Korpus des Tanks frei von Material- oder Elementgrenzen ausgebildet. Ein derartiger Tank ist besonders einfach mittels Spritzgießen oder mittels des Schleuderns (*rotation molding*) herstellbar.

Von besonderem Vorteil ist es weiterhin, wenn eine Befestigungsstelle, an denen der Tank an eine übergeordnete Tragstruktur angeschlossen werden kann, von einer in sich geschlossenen, ringförmigen Verstärkungsrippe eingefasst ist. In einer bevorzugten Ausführungsform verfügt der Korpus zudem über weitere Radialrippen, die sich von einer in sich geschlossenen Verstärkungsrippe, die einer jeweiligen Befestigungsstelle zugeordnet ist, etwa radial erstrecken. Mittels einer solchen Konstruktion sind die Befestigungsstellen des Korpus zusätzlich verstärkt, was im Hinblick auf die Ableitung sämtlicher auf den Tank wirkenden Kräfte in die jeweils übergeordnete Tragstruktur besonders zu bevorzugen ist.

Die Verstärkungsrippen können insbesondere einen rechteckigen Querschnitt aufweisen oder ebenfalls bevorzugt abgerundet ausgebildet sein. Vorzugsweise erstrecken sie sich, insbesondere in Abhängigkeit vom Herstellungsverfahren des Korpus, wahlweise ausgehend von einer Außenseite des Korpus ausschließlich nach außen, ausgehend von einer Innenseite des Korpus ausschließlich nach innen oder sowohl nach innen als auch nach außen. In vorteilhafter Weise befinden sich die Verstärkungsrippen ausschließlich auf einer Außenseite des Korpus, sodass eine Innenseite, die in den Innenraum des Tanks zugeordnet ist, möglichst glatt ausgebildet ist.

Die Verstärkungsrippen sind vorteilhafterweise einstückig mit dem übrigen Korpus verbunden bzw. einstückig an dem Korpus ausgebildet. Hierbei ist es insbesondere denkbar, dass ein entsprechender Tank im Spritzgussverfahren oder im Schleuderverfahren hergestellt wird. Entsprechend kann es von Vorteil sein, wenn der Korpus des Tanks von einem thermoplastischen Kunststoff, insbesondere von Polyethylen (PE), gebildet ist. Ebenso ist es denkbar, den Korpus von einem faserverstärkten Kunststoff zu bilden, wobei vorteilhafterweise zumindest die Verstärkungsrippen mit entsprechenden Verstärkungsfasern ausgestattet sind.

In einer vorteilhaften Ausgestaltung der Verstärkungsrippen beträgt die Wandstärke des Korpus im Bereich einer jeweiligen Verstärkungsrippe mindestens 120% der Wandstärke des Korpus außerhalb der Bereiche der Verstärkungsrippen, vorzugsweise mindestens 200%, weiter vorzugsweise mindestens 280%, der Wandstärke des Korpus außerhalb der Bereiche der Verstärkungsrippen. Mit steigender Höhe der Verstärkungsrippen gegenüber der übrigen Seitenwand steigt das Flächenträgheitsmoment überproportional. Daher führt bereits eine geringe Erhöhung der Wandstärke des Korpus im Bereich der Verstärkungsrippen dazu, dass die Steifigkeit des Korpus erheblich zunimmt. Der Verformung des Korpus unter Normbelastung kann daher bereits mit verhältnismäßig wenigen Verstärkungsrippen effektiv entgegengewirkt werden.

Insbesondere ist eine solche Ausgestaltung von Vorteil, bei der eine Wandstärke des Korpus im Bereich der Verstärkungsrippen im Vergleich zu einer Wandstärke des Korpus außerhalb der Verstärkungsrippen etwa das Doppelte beträgt. Vorzugsweise beträgt die Wandstärke des Korpus im Bereich der Verstärkungsrippen etwa 6 mm- 14 mm, insbesondere etwa 10mm. Vorteilhafterweise sind die Verstärkungsrippen zumindest im Wesentlichen einheitlich ausgebildet Demgegenüber beträgt die Wandstärke des Korpus in Bereichen außerhalb der Verstärkungsrippen bevorzugt 3 mm- 7 mm, insbesondere etwa5 mm. Bei den Bereichen außerhalb der Verstärkungsrippen handelt es sich flächenmäßig um den wesentlichen Anteil des Korpus, typischerweise mindestens 80 % einer Fläche des Korpus. Die Verstärkungsrippen belegen demgegenüber höchstens 20 % der Fläche des Korpus, je nach Geometrie des Tanks womöglich sogar deutlich weniger. Entsprechend ist der Auftrag von Material im Bereich der Verstärkungsrippen bezogen auf die Gesamtmasse des Tanks von vergleichsweise untergeordneter Bedeutung, während umgekehrt die Ersparnis von Material in den Bereichen außerhalb der Verstärkungsrippen sich besonders stark auf die Gesamtmasse des Tanks auswirkt. Im Ergebnis kann die Gesamtmasse des Tanks um bis zu 30 % reduziert werden.

In Hinblick auf den Herstellungsaufwand ist es weiterhin vorteilhaft, wenn die Wandstärke im Bereich der Verstärkungsrippen sowie die Wandstärke außerhalb der Verstärkungsrippen jeweils am gesamten Korpus einheitlich ist.

In einer weiterhin vorteilhaften Ausgestaltung der erfindungsgemäßen Arbeitsmaschine weist mindestens eine Verstärkungsrippe des Korpus des Tanks eine quer zu ihrer Längsachse gemessene Breite von mindestens 10 mm auf. Die "Längsachse" einer Verstärkungsrippe bezeichnet dabei diejenige Achse, entlang derer sich gewissermaßen eine Schwerpunktlinie der jeweiligen Verstärkungsrippe erstreckt. Mithin handelt es sich bei der Längsachse typischerweise um eine gebogene, geschwungene und/oder geknickte Achse und mithin nicht um eine im mathematischen Sinne gerade Linie. Entsprechendes ergibt sich besonders einfach anhand des nachstehenden Ausführungsbeispiels.

Vorteilhafterweise ist die erfindungsgemäße Arbeitsmaschine derart ausgebildet, dass an dem Korpus Gruppen von, insbesondere zwei oder drei, Verstärkungsrippen angeordnet sind. Bevorzugt verlaufen die Verstärkungsrippen zumindest abschnittsweise oder vollständig parallel zueinander. Zwar ist das Flächenträgheitsmoment durch eine höher auftragende Verstärkungsrippe großer Wandstärke stärker erhöht - und die Verformung der Seitenwandung demnach stärker verringert - als durch eine niedriger auftragende Verstärkungsrippe geringerer Wandstärke. Jedoch kann sich durch die Verwendung einer Mehrzahl geringer auftragender Verstärkungsrippen anstelle einer höher auftragenden Verstärkungsrippe weniger Staub oder Dreck am Tank ablagern. Die Belastung mit letzteren ist bei landwirtschaftlichen Arbeitsmaschinen besonders hoch, wobei die sich ablagernden Materialien in aller Regel leicht brennbar sind und sich bei Kontakt mit heißen Bauteilen schnell entzünden können. Die Ausführung der Verstärkungsrippen mit einer vergleichsweise geringen Höhe ist daher zu bevorzugen, wobei die Höhe vorteilhafterweise höchstens 14 mm, weiter vorzugsweise höchstens 6 mm, beträgt.

Unabhängig von der übrigen Ausgestaltung der Verstärkungsrippen ist es zudem vorteilhaft, mindestens eine Verstärkungsrippe, vorzugsweise sämtliche Verstärkungsrippen, abgerundet auszuführen. Auf diese Weise wird das Anhaften von Staub noch weiter erschwert.

In einer besonders vorteilhaften Ausgestaltung beschreibt die Erfindung eine landwirtschaftliche Arbeitsmaschine mit einem Tank zur Lagerung einer Flüssigkeit, insbesondere eines flüssigen Kraftstoffs, umfassend einen Korpus, der eine Mehrzahl von

Seitenwandungen aufweist, mittels derer ein Innenraum des Tanks eingefasst ist, wobei der Korpus
- an sämtlichen seiner Seitenwandungen jeweils mindestens eine Verstärkungsrippe aufweist, und/oder
- in einem Mittelbereich mindestens einer Seitenwandung, vorzugsweise jeweils in den Mittelbereichen sämtlicher Seitenwandungen, eine in sich geschlossene Ringrippe aufweist, und/oder
- an mindestens einer Außenecke, vorzugsweise jeweils an sämtlichen Außenecken, mindestens eine in sich geschlossene Eckrippe aufweist, mittels derer die Außenecke eingefasst ist, und/oder
- an mindestens einer Innenecke, vorzugsweise jeweils an sämtlichen Innenecken, mindestens eine Kreisrippe aufweist, die sich entlang der sie umgebenden Seitenwandungen erstreckt.

Um die Steifigkeit des Korpus weiter zu erhöhen, ist es zudem bevorzugt, dass der Korpus eine Mehrzahl von sich linienförmig erstreckender Verstärkungsrippen aufweist, die jeweils an einer Ringrippe enden bzw. von einer Ringrippe ausgehen, sich zu einem Seitenrand einer jeweiligen Seitenwandung erstrecken und an dem Seitenrand auf die jeweils angrenzende Seitenwandung umgeschlagen sind.

Eine landwirtschaftliche Arbeitsmaschine ist bevorzugt eine selbstfahrende landwirtschaftliche Arbeitsmaschine, insbesondere eine Erntemaschine wie beispielsweise ein Mähdrescher oder ein Feldhäcksler, eine Zugmaschine wie beispielsweise ein Traktor, oder ein Teleskoplader.

In verfahrenstechnischer Hinsicht wird die zugrundeliegende Aufgabe erfindungsgemäß mittels eines Verfahrens zur Konstruktion eines solchen Tanks gelöst. Dieses umfasst die folgenden Verfahrensschritte:
a) Es wird ein virtuelles Modell eines Korpus des Tanks erstellt, wobei der Korpus eine Mehrzahl von Seitenwandungen aufweist, die gemeinsam einen Innenraum des Tanks einfassen.
b) Dem virtuellen Modell werden ein Normbelastungszustand sowie Lagerungsbedingungen vorgegeben, wobei der Normbelastungszustand zumindest eine vollständige Füllung des Innenraums mit einer Flüssigkeit sowie vorzugsweise eine Beaufschlagung des Innenraums mit einem Innendruck vorsieht.
c) An dem Modell wird unter dem Normbelastungszustand sowie den Lagerungsbedingungen eine Topologieoptimierung, mittels Finite Elemente Analyse, vorgenommen.
d) Basierend auf dem Ergebnis der Topologieoptimierung werden an dem Korpus Verstärkungsrippen angeordnet, wobei mindestens eine Seitenwandung, vorzugsweise mehrere Seitenwandungen, weiter vorzugsweise sämtliche Seitenwandungen, in ihrem Mittelbereich mindestens eine Verstärkungsrippe aufweist, die in Form einer ellipsenförmigen, in sich geschlossenen Ringrippe ausgebildet ist.

Das Ergebnis der Topologieoptimierung zeigt den Anteil der Elemente des Korpus an seiner Steifigkeit an. Anhand dieses Ergebnisses werden die Verstärkungsrippen geplant. Dabei wird an zumindest einem Teil der Seitenwandungen eine Verstärkungsrippe angeordnet. Vorzugsweise werden an allen Seitenwandungen Verstärkungsrippen angeordnet. Besonders bevorzugt werden an den Seitenwandungen Ringrippen, an den Innenecken Kreisrippen, an den Außenecken Eckrippen und/oder die Ringrippen verbindende Radial- und/oder Verstärkungsrippen vorgesehen.

Bevorzugt wird an dem so optimierten Tank anschließend eine Finite Elemente Analyse durchgeführt, aus der sich die in diesem mit den Verstärkungsrippen versehenen Korpus auftretenden Verformungen und die sich einstellenden Spannungen ergeben. Die Anordnung der Verstärkungsrippen am Korpus wird weiterhin bevorzugt solange korrigiert, bis die Analyse anzeigt, dass der Korpus den Anforderungen an die Festigkeit und die Steifigkeit genügt. Der anhand dieses dann vorliegenden optimierten Korpus gefertigte Tank kann letztlich insgesamt weniger steif sein, als der herkömmliche, nicht optimierte Tank ohne Verstärkungsrippen. Jedoch weist er eine geringere Masse auf und ist daher kostengünstiger herstellbar. Dadurch ist das Gewicht der landwirtschaftlichen Arbeitsmaschine zudem entsprechend verringert.

Der erfindungsgemäße Tank sowie das erfindungsgemäße Verfahren sind nachstehend anhand eines Ausführungsbeispiels, das in den Figuren dargestellt ist, näher erläutert. Es zeigt:
- Fig. 1:: Eine perspektivische Ansicht eines Tanks einer erfindungsgemäßen landwirtschaftlichen Arbeitsmaschine,
- Fig. 2:: Eine Seitenansicht des Tanks gemäß Figur 1,
- Fig. 3:: Das Ergebnis einer Topologieoptimierung an einem Tank infolge eines vorgegebenen Normbelastungszustands bei vorgegebenen Lagerungsbedingungen,
- Fig. 4:: Ein Modell eines Korpus des Tanks gemäß Figur 3 mit eingezeichnetem Verlauf der geplanten Verstärkungsrippen,
- Fig. 5:: Eine perspektivische Ansicht eines Tanks, der auf Basis des Entwurfs gemäß den Figuren 3 und 4 konstruiert ist,
- Fig. 6:: Eine schematische Darstellung eines Ausschnitts einer Wandung eines Korpus eines erfindungsgemäßen Tanks und
- Fig. 7:: Ein schematischer Querschnitt durch eine Wandung eines erfindungsgemäßen Tanks.

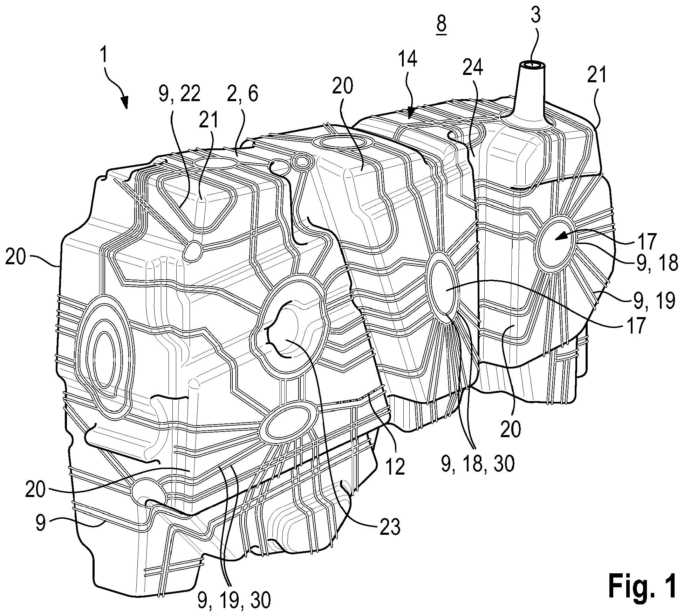

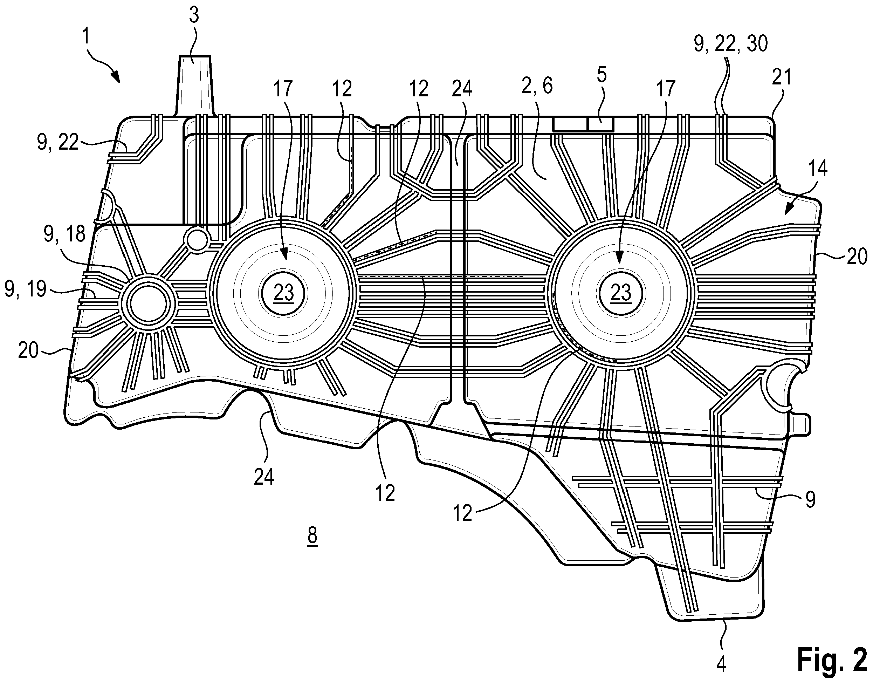

Ein erstes Ausführungsbeispiel, das in den **Figuren 1** **und** **2** dargestellt ist, beschreibt einen Tank **1,** der dazu geeignet ist, an einer in den Figuren nicht dargestellten erfindungsgemäßen landwirtschaftlichen Arbeitsmaschine angeordnet zu werden. Bei dem Tank **1** handelt es sich hier um einen Kraftstofftank, der mit Dieselkraftstoff befüllbar ist. Der Tank **1** umfasst einen Korpus **2,** der eine Mehrzahl von Seitenwandungen **6** aufweist. Diese sind derart angeordnet, dass sie gemeinsam einen Innenraum **7** des Tanks **1** flüssigkeitsdicht einfassen. "Flüssigkeitsdicht" bedeutet in diesem Zusammenhang, dass mittels des Tanks **1** abgesehen von absichtlich angeordneten Öffnungen eine in dem Innenraum befindliche Flüssigkeit verlustfrei lagerbar ist. Bei den absichtlich angeordneten Öffnungen handelt es sich in dem gezeigten Beispiel insbesondere um eine Befüllungsöffnung **3,** eine Entnahmeöffnung **4** sowie eine Belüftungsöffnung **5.**

Die Befüllungsöffnung **3,** die an einer Oberseite des Korpus **2** angeordnet ist, ist dazu geeignet, eine strömungstechnische Verbindung zwischen einer Umgebung **8** und dem Innenraum **7** des Tanks **1** herzustellen. Auf diese Weise ist der Tank **1** mit einer Flüssigkeit, das heißt insbesondere Dieselkraftstoff, befüllbar. Zur Entnahme der Flüssigkeit aus dem Innenraum **7** dient die Entnahmeöffnung **4,** die an einer tiefsten Stelle des Korpus **2** angeordnet ist. Dies ergibt sich insbesondere anhand von **Figur 2****.** Die Entnahmeöffnung **4** kann insbesondere mit einer Kraftstoffpumpe zusammenwirken, mittels derer die Flüssigkeit aus dem Innenraum abziehbar ist. Schließlich umfasst der Korpus **2** eine Belüftungsöffnung **5,** die einen Austritt von Gas aus dem Innenraum **7** hin zu der Umgebung **8** des Tanks **1** ermöglicht. Die Belüftungsöffnung **5** kann insbesondere mit einem Überdruckventil zusammenwirken, das bei Vorliegen eines definierten Drucks eine strömungstechnische Verbindung von dem Innenraum **7** hin zu der Umgebung **8** freigibt.

Ferner umfasst der gezeigte Tank **1** zwei den Korpus **2** vollständig durchdringende Ausnehmungen **23,** die jeweils eine zylindrische Form aufweisen. Diese sind dazu geeignet, jeweils mit einer Lagerstelle der landwirtschaftlichen Arbeitsmaschine zusammenzuwirken, wobei der Korpus **2** insbesondere auf zylindrische Zapfen aufschiebbar ist, die mit den Ausnehmungen **23** korrespondieren.

Der Korpus **2** ist in dem gezeigten Beispiel derart ausgeführt, dass er eine Vielzahl von Seitenwandungen **6** aufweist. Insbesondere umfasst der Korpus **2,** der in seiner Grundform kubisch ausgebildet ist, an seinen Seitenflächen jeweils mehrere Seitenwandungen **6.** Derselben Seitenfläche zugeordnete Seitenwandungen **6** sind hier mittels rillenartigen Einbuchtungen **24** voneinander getrennt. Die Einbuchtungen **24** erfüllen den Zweck, den Tank **1** als Ganzes an einer zugehörigen Tragstruktur der Arbeitsmaschine lagern zu können, wobei eine Form der Tragstruktur an die Konturen der Einbuchtungen **24** bzw. umgekehrt angepasst sind. Die einzelnen Seitenwandungen **6** umfassen jeweils umlaufende Seitenränder **20,** an denen eine Wandung des Korpus **2** einen Knick aufweist, insbesondere einen solchen um 90°. An diesen Knicken gehen die einzelnen Seitenwandungen **6** des Korpus **2** ineinander über bzw. grenzen mittels der Knicke aneinander an.

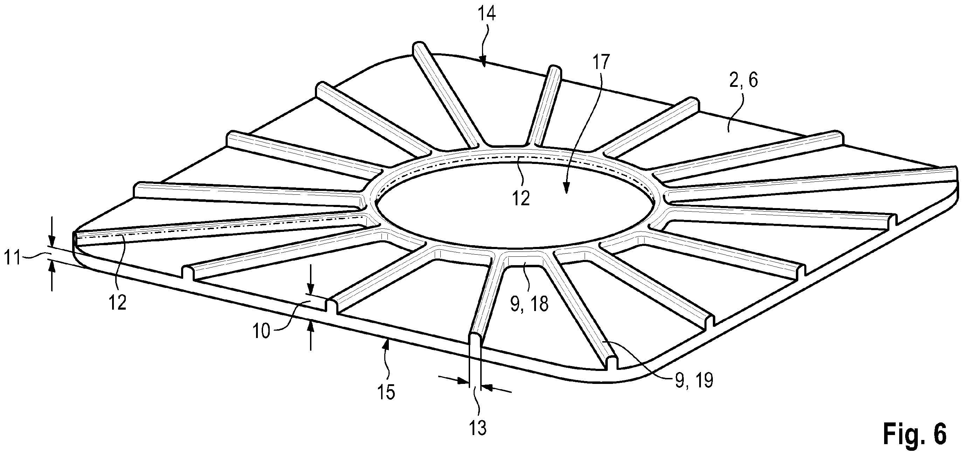

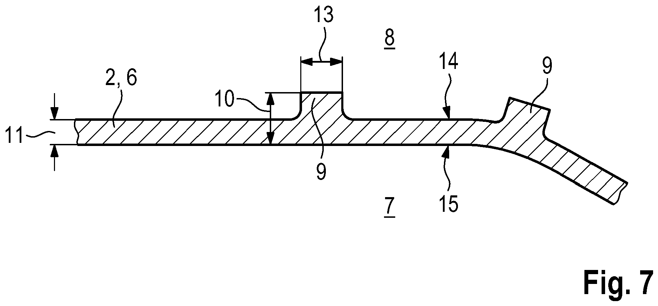

Erfindungsgemäß ist der Tank **1** derart ausgebildet, dass sein Korpus **2** eine Mehrzahl von Verstärkungsrippen **9** aufweist. Die Verstärkungsrippen **9** sind in dem gezeigten Beispiel derart ausgeführt, dass sie über eine Außenseite **14** des Korpus **2** erhaben sind. Dies hat zur Folge, dass der Korpus **2** an seiner Außenseite **14** ein Relief aufweist. Die Verstärkungsrippen **9** sind in dem gezeigten Beispiel ausschließlich an der Außenseite **14** des Korpus **2** angeordnet, während eine dem Innenraum **7** zugewandte Innenseite **15** des Korpus **2** zumindest im Wesentlichen glatt ausgebildet ist. Letzteres ergibt sich besonders gut anhand zweier prinzipieller Darstellungen in den **Figuren 6** **und** **7****.**

Eine Anordnung der Verstärkungsrippen **9** an den Seitenwandungen **6** erfolgt auf Basis einer Topologieoptimierung, die an einem virtuellen Modell des Tanks **1** durchgeführt wird. Der Topologieoptimierung wird ein Normbelastungszustand des Tanks **1** zu Grunde gelegt. Ferner werden Lagerungsbedingungen für den Korpus **2** definiert, wobei diese Lagerungsbedingungen vorgesehene Lagerpunkte des Korpus **2** an der landwirtschaftlichen Arbeitsmaschine wiedergeben. Mittels einer im Rahmen der Topologieoptimierung durchgeführten Finite Elemente Analyse werden Kräfte, Spannungen, Dehnungen, Verformungen und/oder eine für die Verformungen aufzubringende Verformungsenergie berechnet, die sich infolge des Normbelastungszustands sowie der Lagerungsbedingungen einstellen. Die Verstärkungsrippen **9** sind basierend auf einem solchen Ergebnis der Finite Elemente Analyse an dem Korpus **2** angeordnet. In dem gezeigten Beispiel sind die Verstärkungsrippen **9** derart angeordnet, dass eine Verformung des Korpus **2** minimiert ist. Mithin befinden sich die Verstärkungsrippen **9** in solchen Bereichen der Seitenwandungen **6,** die infolge des Normbelastungszustands bei einem herkömmlichen Tank (nicht dargestellt) ohne Verstärkungsrippen 9 eine besonders starke Verformung hervorrufen würden. Aufgrund der in dem gezeigten Beispiel konstanten Wandstärke **11** des Korpus **2** in Bereichen außerhalb der Verstärkungsrippen **9,** fallen die Bereiche größter aufzuwendender Verformungsenergie mit denjenigen der größten Spannungen zusammen.

In den Ausführungsbeispielen der **Figuren 1****,** **2** **und** **5** sind jeweils anstelle großer, das heißt breiter und/oder dicker, Verstärkungsrippen **9** (s. **Figur 6**) Gruppen **30** von zwei parallel zueinander verlaufenden kleinen, das heißt schmalen und/oder dünnen, Verstärkungsrippen **9** vorgesehen, die gegenüber der Seitenwandung 6 weniger hoch auftragend sind.

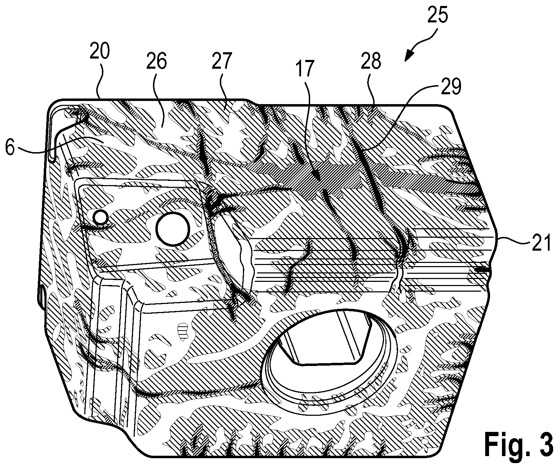

Die Überführung des Ergebnisses der Topologieoptimierung ist nachstehend unter Heranziehung der Darstellungen in den **Figuren 3 bis 5** näher erläutert.

Die Anordnung der Verstärkungsrippen **9** an den Seitenwandungen **6** des Korpus **2** hat hier dazu geführt, dass eine Mehrzahl von Verstärkungsrippen **9** in Form elliptischer Ringrippen **18** ausgeführt ist, die sich in Mittelbereichen **17** einer jeweils zugeordneten Seitenwandung **6** befinden. Diese Ringrippen **18,** deren Längsachsen **12** sich in Richtung eines gleichbleibenden Anteils der Elemente an der Steifigkeit des Korpus **2** erstrecken, umschließen den jeweiligen Mittelbereich **17** der zugehörigen Seitenwandung **6.** Die Ringrippen **18** bilden für den Bereich, in dem der Verformungsweg der Seitenwandung **6** infolge des Normbelastungszustands betragsmäßig am größten ist, eine Verstärkung, an der der Mittelbereich **17** sich wie an einem umlaufenden Auflager bzw. Unterzug abstützen kann.

Ferner ist eine Vielzahl der Verstärkungsrippen **9** von Radialrippen **19** gebildet, die sich zumindest abschnittsweise geradlinig entlang der Außenseite **14** des Korpus **2** erstrecken. Die Radialrippen **19** sind erstrecken sich von einer Ringrippe 18 ausgehend in Richtung zu einem Seitenrand **20** der Seitenwandung **6** zu. Zumindest die jeweils äußere Ringrippe **18** einer Gruppe **30** von Ringrippen **18** ist in dem gezeigten Beispiel unmittelbar mit den Radialrippen **19** vereint, sodass diese stoffschlüssig ineinander übergehen. Der Korpus **2** des Tanks **1** ist zudem insgesamt einstückig ausgebildet, wobei er hier von Polyethylen gebildet ist.

Weiterhin verfügt der Korpus **2** des Tanks **1** in seinen Außenecken **21,** an denen drei Seitenwandungen **6** aneinander angrenzen, über Verstärkungsrippen **9,** die die jeweilige Außenecke **21** ringförmig einfassen, wobei sich die jeweilige Verstärkungsrippe **9** abschnittsweise über jede der Seitenwandungen **6** erstreckt, die an die Außenecke **21** grenzen. Diese Verstärkungsrippen **9** bilden folglich Eckrippen **22,** wobei die Längsachsen **12** der Eckrippen **22** sich im Wesentlichen in Richtung des gleichbleibenden Anteils der Elemente an der Steifigkeit des Korpus **2** erstrecken.

Betreffend ihre Abmessungen sind die Verstärkungsrippen **9** derart ausgebildet, dass eine Wandstärke **10** des Korpus **2** im Bereich der Verstärkungsrippen **9** hier 10 mm beträgt, während eine Wandstärke **11** des Korpus **2** in Bereichen außerhalb der Verstärkungsrippen **9** 5 beträgt. Eine senkrecht zu der jeweiligen Längsachse **12** gemessene Breite **13** einer jeweiligen Verstärkungsrippe **9** beträgt ferner 10 mm. Insgesamt ist die Wandstärke **10** im Bereich der Verstärkungsrippen **9** sowie die Wandstärke **11** außerhalb der Verstärkungsrippen **9** jeweils einheitlich vorgesehen.

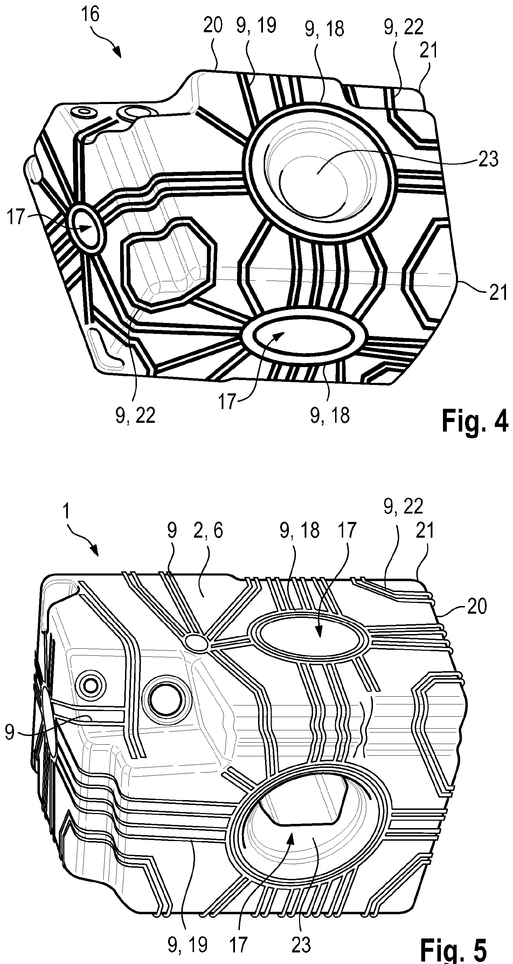

Die Konstruktion eines Tanks **1** erfolgt - wie vorstehend bereits skizziert - mittels einer an einem virtuellen Modell **25** des jeweiligen Korpus **2** durchgeführten Topologieoptimierung. Das entsprechende Vorgehen ergibt sich besonders gut anhand der **Figuren 3 bis 5**. **Figur 3** zeigt das Ergebnis einer Topologieoptimierung an einem Modell **25,** das einen Korpus **2** eines jeweils zu konstituierenden Tanks (s. **Figur 5**) darstellt. Die Topologieoptimierung liefert als Ergebnis eine Darstellung, anhand derer entnehmbar ist, welche Bereiche **26** - **30** des Modells **25** für eine Steifigkeit des modellierten Korpus von höherer bzw. niedrigerer Bedeutung sind. Mit steigender Bedeutung sind die Bereiche hier umso stärker schraffiert. Somit bezeichnen vierte Bereiche **29** hier solche, die für die Steifigkeit des zu konstituierenden Korpus von übergeordneter Bedeutung sind, während der Anteil der dritten bis ersten Bereiche **28** - **26** an der Steifigkeit des Korpus umso kleiner ist, so dass erste Bereiche **26** für die Steifigkeit von eher untergeordneter Bedeutung sind. Dieses Ergebnis der Topologieoptimierung, das unter Vorgabe des Normbelastungszustands sowie der Definition von Lagerungsbedingungen ermittelt wurde, wird herangezogen, um sodann an dem Korpus **2** des modellierten Tanks **1** einen Verlauf der Verstärkungsrippen **9** zu planen. Hierzu wird ein Entwurfsmodell **16** erstellt, das sich beispielhaft aus **Figur 4** ergibt. Das Entwurfsmodell **16** lässt bereits die aus dem in den **Figuren 1** **und** **2** dargestellten Beispiel bekannten, an den Seitenrändern **20** umschlagenden Verstärkungsrippen **9,** Ringrippen **18,** Radialrippen **9** sowie Eckrippen **22** erkennen. Auf Basis dieses Entwurfsmodells **16** wird schließlich der Korpus **2** des Tanks **1** konstruiert, der in **Figur 5** veranschaulicht ist. An dem so optimierten Tank **1** wird dafür eine Finite Elemente Analyse vorgenommen wird, und der Verlauf sowie die Anordnung der Verstärkungsrippen **9** am Korpus **2** solange korrigiert, bis der Korpus **2** den Anforderungen an Festigkeit und Steifigkeit genügt. Das so gestaltete Modell des Korpus **2** ist im Hinblick auf die Verformungsenergie infolge des vorgegebenen Normbelastungszustands optimiert. Anhand dieses fertigen Modells kann anschließend ein Werkzeug (nicht gezeigt) für die Herstellung des Tanks **1** gefertigt werden.

**Figur 6** zeigt beispielhaft einen Ausschnitt aus einer Seitenwandung **6** eines etwa quaderförmigen Tanks **1.** Sichtbar ist hier vor allem die einheitliche Wanddicke **11** der Seitenwandung **6** außerhalb der Verstärkungsrippen **9.** Zudem sind anstelle von Gruppen **30** (s. **Figuren 1****,** **2** **und** **5**) von jeweils zwei kleineren Verstärkungsrippen **9** an diesem Korpus **2** beispielhaft jeweils einzelne größere Verstärkungsrippen **9** vorgesehen, die gegenüber der Seitenwandung **6** höher auftragen.

Der in **Figur 7** gezeigte Querschnitt einer Seitenwandung **6** zeigt die einstückige Herstellung des Tanks **1.** Sichtbar ist hier vor allem eine Kontur der Verstärkungsrippen **9,** die zumindest in einem Übergangsbereich zur übrigen Seitenwandung 6 abgerundet ist, um das Anhaften von Staub zu erschweren.

### Bezugszeichenliste

- 1: Tank
- 2: Korpus
- 3: Befüllungsöffnung
- 4: Entnahmeöffnung
- 5: Belüftungsöffnung
- 6: Seitenwandung
- 7: Innenraum
- 8: Umgebung
- 9: Verstärkungsrippe
- 10: Wandstärke
- 11: Wandstärke
- 12: Längsachse
- 13: Breite
- 14: Außenseite
- 15: Innenseite
- 16: Entwurfsmodell
- 17: Mittelbereich
- 18: Ringrippe
- 19: Radialrippe
- 20: Seitenrand
- 21: Außenecke
- 22: Eckrippe
- 23: Ausnehmung
- 24: rillenartige Einbuchtung
- 25: Modell
- 26 - 29: Erster - vierter Bereich
- 30: Gruppe

## Patentansprüche

1. Landwirtschaftliche Arbeitsmaschine mit einem Tank (1) zur Lagerung einer Flüssigkeit, insbesondere eines flüssigen Kraftstoffs, umfassend einen Korpus (2), der eine Mehrzahl von Seitenwandungen (6) aufweist, mittels derer ein Innenraum (7) des Tanks (1) eingefasst ist,
der Korpus (2) an zumindest einem Teil seiner Seitenwandungen (6) jeweils mindestens eine Verstärkungsrippe (9) aufweist,
**dadurch gekennzeichnet, dass**
der Verlauf der Verstärkungsrippen (9) basierend auf einem Ergebnis einer Topologieoptimierung mittels Finite Elemente Analyse ermittelt ist und wobei mindestens eine Seitenwandung (6), vorzugsweise mehrere Seitenwandungen (6), weiter vorzugsweise sämtliche Seitenwandungen (6), in ihrem Mittelbereich (17) mindestens eine Verstärkungsrippe (9) aufweist, die in Form einer ellipsenförmigen, in sich geschlossenen Ringrippe (18) ausgebildet ist.

2. Arbeitsmaschine nach Anspruch 1, **dadurch gekennzeichnet, dass** der Verlauf und/oder die Anordnung mindestens einer Verstärkungsrippe (9), vorzugsweise sämtlicher Verstärkungsrippen (9), unter Berücksichtigung einer Herstellbarkeit und/oder von Herstellungskosten optimiert ist.

3. Arbeitsmaschine nach Anspruch 1 oder 2, **dadurch gekennzeichnet, dass** der Verlauf mindestens einer Verstärkungsrippe (9), vorzugsweise sämtlicher Verstärkungsrippen (9), in Abhängigkeit von zumindest einem Normbelastungszustand optimiert ist.

4. Arbeitsmaschine nach Anspruch 3, **dadurch gekennzeichnet, dass** die Verstärkungsrippen (9) zumindest teilweise in solchen Bereichen an dem Korpus (2) angeordnet sind, die als Ergebnis der Topologieoptimierung bei Vorliegen des Normbelastungszustands einen großen Anteil an der Steifigkeit des Tanks haben.

5. Arbeitsmaschine nach einem der Ansprüche 1 bis 4, **dadurch gekennzeichnet, dass** mindestens eine Verstärkungsrippe (9), vorzugsweise eine Mehrzahl von Verstärkungsrippen (9), an dem Korpus (2) zumindest bereichsweise linienförmig ausgebildet sind.

6. Arbeitsmaschine nach Anspruch 1, **dadurch gekennzeichnet, dass** sich ausgehend von einer jeweiligen Ringrippe (18) eine Mehrzahl von in sich geraden, als Radialrippen (19) ausgebildeten Verstärkungsrippen (9) radial erstreckt.

7. Arbeitsmaschine nach einem der Ansprüche 1 bis 6, **dadurch gekennzeichnet, dass** im Bereich eines Seitenrandes (20) zwischen zwei Seitenwandungen (6), vorzugsweise im Bereich aller Seitenränder (20), mindestens eine Verstärkungsrippe (9) oder mehrere Verstärkungsrippen (9) in einem Winkel, insbesondere quer, zum Seitenrand (20) des Korpus (2) angeordnet sind und von einer Seitenwandung (6) aus über den Seitenrand (20) zur anderen Seitenwandung (6) umschlagen.

8. Arbeitsmaschine nach einem der Ansprüche 1 bis 6, **dadurch gekennzeichnet, dass** jeweils zumindest eine Verstärkungsrippe (9) von einer Ringrippe jeder der Seitenwandungen (6) jeweils zu einer Ringrippe (18) ihrer benachbarten Seitenwandung (6) verläuft.

9. Arbeitsmaschine nach einem der Ansprüche 1 bis 8, **dadurch gekennzeichnet, dass** mindestens eine Außenecke (21), vorzugsweise mehrere Außenecken (21), weiter vorzugsweise sämtliche Außenecken (21), des Korpus (2), an denen mindestens drei Seitenwandungen (6) aneinander angrenzen, mittels mindestens einer Verstärkungsrippe (9) eingefasst ist, die in Form einer in sich geschlossenen Eckrippe (22) ausgebildet ist.

10. Arbeitsmaschine nach einem der Ansprüche 1 bis 9, **dadurch gekennzeichnet, dass** in Bereichen der Verstärkungsrippen (9) eine Wandstärke (10) des Korpus (2) mindestens 120 %, vorzugsweise mindestens 200 %, weiter vorzugsweise mindestens 280%, einer Wandstärke (11) des Korpus (2) außerhalb der Bereiche der Verstärkungsrippen (9) beträgt.

11. Arbeitsmaschine nach einem der Ansprüche 1 bis 11, **dadurch gekennzeichnet, dass** der Korpus
• eine Wandstärke (10) des Korpus (2) im Bereich einer Verstärkungsrippe (9) 6 mm - 14 mm beträgt, und/oder
• eine quer zu einer Längsachse (12) einer jeweiligen Verstärkungsrippe (9) gemessene Breite (13) der Verstärkungsrippe mindestens 10 mm beträgt, und/oder
• eine Wandstärke (11) des Korpus (2) in Bereichen außerhalb der Verstärkungsrippen (9) 3 mm - 7 mm beträgt.

12. Verfahren zur Konstruktion eines Tanks (1) zur Lagerung einer Flüssigkeit, insbesondere eines flüssigen Kraftstoffs, für eine landwirtschaftliche Arbeitsmaschine nach einem der vorherigen Ansprüche, umfassend die folgenden Verfahrensschritte:
a) Es wird ein virtuelles Modell (25) eines Korpus (2) des Tanks (1) erstellt, wobei der Korpus (2) eine Mehrzahl von Seitenwandungen (6) aufweist, die gemeinsam einen Innenraum (7) des Tanks (1) einfassen.
b) Dem virtuellen Modell (25) werden ein Normbelastungszustand sowie Lagerungsbedingungen vorgegeben, wobei der Normbelastungszustand zumindest eine vollständige Füllung des Innenraums (7) mit einer Flüssigkeit sowie eine Beaufschlagung des Innenraums (7) mit einem Innendruck vorsieht.
c) An dem Modell (25) wird unter dem Normbelastungszustand sowie den Lagerungsbedingungen eine Topologieoptimierung, mittels Finite Elemente Analyse, vorgenommen.
d) Basierend auf dem Ergebnis der Topologieoptimierung werden an dem Korpus (2) Verstärkungsrippen (9) angeordnet, wobei mindestens eine Seitenwandung (6), vorzugsweise mehrere Seitenwandungen (6), weiter vorzugsweise sämtliche Seitenwandungen (6), in ihrem Mittelbereich (17) mindestens eine Verstärkungsrippe (9) aufweist, die in Form einer ellipsenförmigen, in sich geschlossenen Ringrippe (18) ausgebildet ist..

13. Verfahren nach Anspruch 12, **dadurch gekennzeichnet, dass** danach an dem so optimierten virtuellen Tank (1) eine Finite Elemente Analyse vorgenommen wird, und die Anordnung der Verstärkungsrippen (9) am Korpus (2) solange korrigiert wird, bis der Korpus (2) den Anforderungen an Festigkeit und Steifigkeit genügt.

## Claims

1. An agricultural working machine with a tank (1) for storing a liquid, in particular a liquid fuel, comprising a carcass (2) which has a plurality of side walls (6) by means of which an interior (7) of the tank (1) is enclosed, the carcass (2) having at least one reinforcing rib (9) on at least a portion of each of its side walls (6),
**characterized in that**
the course of the reinforcing ribs (9) is determined on the basis of a result from topology optimization using finite element analysis and wherein at least one side wall (6), preferably a plurality of side walls (6), more preferably all of the side walls (6), has at least one reinforcing rib (9) in its central region (17) which is configured in the form of an ellipsoidal, closed annular rib (18).

2. The working machine according to claim 1, **characterized in that** the course and/or the configuration of at least one of the reinforcing ribs (9), preferably all of the reinforcing ribs (9), is optimized taking into consideration the capability of production and/or the production costs.

3. The working machine according to claim 1 or claim 2, **characterized in that** the course of at least one reinforcing rib (9), preferably of all of the reinforcing ribs (9), is optimized as a function of at least one standard load condition.

4. The working machine according to claim 3, **characterized in that** the reinforcing ribs (9) are at least in part disposed on the carcass (2) in those regions which, as a result of the topology optimization with a specified standard load condition, have a large proportion of the rigidity of the tank.

5. The working machine according to one of claims 1 to 4, **characterized in that** at least regions of at least one reinforcing rib (9), preferably of a plurality of reinforcing ribs (9), are in a linear configuration on the carcass (2).

6. The working machine according to claim 1, **characterized in that** a plurality of straight reinforcing ribs (9) configured as radial ribs (19) extend from a respective annular rib (18).

7. The working machine according to one of claims 1 to 6, **characterized in that** in the region of a side edge (20) between two side walls (6), preferably in the region of all side edges (20), at least one reinforcing rib (9) or a plurality of reinforcing ribs (9) are disposed at an angle, in particular transversely, to the side edge (20) of the carcass (2) and turn from one side wall (6) over the side edge (20) to the other side wall (6).

8. The working machine according to one of claims 1 to 6, **characterized in that** at least one respective reinforcing rib (9) runs from a respective annular rib of each of the side walls (6) to an annular rib (18) of its adjacent side wall (6).

9. The working machine according to one of claims 1 to 8, **characterized in that** at least one outer corner (21), preferably a plurality of outer corners (21), more preferably all of the outer corners (21) of the carcass (2) at which at least three side walls (6) adjoin each other, is surrounded by at least one reinforcing rib (9) which is configured in the shape of a closed corner rib (22).

10. The working machine according to one of claims 1 to 9, **characterized in that** in the regions of the reinforcing ribs (9), a wall thickness (10) of the carcass (2) is at least 120%, preferably at least 200%, more preferably at least 280% of a wall thickness (11) of the carcass (2) beyond the regions of the reinforcing ribs (9).

11. The working machine according to one of claims 1 to 11, **characterized in that** the carcass:
• has a wall thickness (10) for the carcass (2) of 6 mm - 14 mm in the region of a reinforcing rib (9), and/or
• has a measured width (13) of the reinforcing rib of at least 10 mm transversely to a longitudinal axis (12) of a respective reinforcing rib (9), and/or
• has a wall thickness (11) of the carcass (2) of 3 mm - 7 mm in regions beyond the reinforcing ribs (9).

12. A method for constructing a tank (1) for storing a liquid, in particular a liquid fuel, for an agricultural working machine according to one of the preceding claims, comprising the following steps of the method:
a) generating a virtual model (25) of a carcass (2) of the tank (1), wherein the carcass (2) has a plurality of side walls (6) which together enclose an interior (7) of the tank (1),
b) specifying a standard load condition as well as storage conditions on the virtual model (25), wherein the standard load condition stipulates at least complete filling of the interior (7) with a liquid as well as applying an internal pressure to the interior (7),
c) under the standard load condition as well as the storage conditions, carrying out a topology optimization on the model (25) using finite element analysis,
d) based on the result from the topology optimization, disposing reinforcing ribs (9) on the carcass (2), wherein at least one side wall (6), preferably a plurality of side walls (6), more preferably all of the side walls (6), have at least one reinforcing rib (9) in their central region (17) which is configured in the form of an ellipsoidal, closed annular rib (18).

13. The method according to claim 12, **characterized in that** a finite element analysis is subsequently carried out on the virtual tank (1) which has been optimized and the disposition of the reinforcing ribs (9) on the carcass (2) is corrected until the carcass (2) satisfies the requirements as regards strength and rigidity.

## Revendications

1. Machine de travail agricole comprenant un réservoir (1) pour la conservation d'un liquide, en particulier d'un carburant liquide, incluant un corps (2) qui comporte une pluralité de parois latérales (6) au moyen desquelles est entouré un espace intérieur (7) du réservoir (1),
le corps (2) comportant au moins une nervure de renfort (9) sur au moins une partie de ses parois latérales (6),
**caractérisée en ce que**
le tracé des nervures de renfort (9) est déterminé sur la base d'un résultat d'une optimisation topologique au moyen d'une analyse par éléments finis, et au moins une paroi latérale (6), de préférence plusieurs parois latérales (6), plus préférentiellement toutes les parois latérales (6) comportant dans leur zone centrale (17) au moins une nervure de renfort (9) qui est conçue en forme de nervure annulaire elliptique fermée en soi (18).

2. Machine de travail selon la revendication 1,
**caractérisée en ce que** le tracé et/ou l'agencement au moins d'une nervure de renfort (9), de préférence de toutes les nervures de renfort (9), est optimisé en tenant compte d'une fabricabilité et/ou des coûts de fabrication.

3. Machine de travail selon la revendication 1 ou 2,
**caractérisée en ce que** le tracé au moins d'une nervure de renfort (9), de préférence de toutes les nervures de renfort (9), est optimisé en fonction d'au moins un état de sollicitation standard.

4. Machine de travail selon la revendication 3,
**caractérisée en ce que** les nervures de renfort (9) sont disposées au moins en partie dans des zones sur le corps (2) qui, comme résultat de l'optimisation topologique en présence de l'état de sollicitation standard, représentent une grande proportion de la rigidité du réservoir.

5. Machine de travail selon une des revendications 1 à 4, **caractérisée en ce qu'**au moins une nervure de renfort (9), de préférence une pluralité de nervures de renfort (9), est conformée sur le corps (2) de manière au moins par endroits linéaire.

6. Machine de travail selon la revendication 1,
**caractérisée en ce qu'**à partir d'une nervure annulaire respective (18) s'étend radialement une pluralité de nervures de renfort rectilignes (9) conformées en nervures radiales (19).

7. Machine de travail selon une des revendications 1 à 6, **caractérisée en ce que** dans la zone d'un bord latéral (20) entre deux parois latérales (6), de préférence dans la zone de tous les bords latéraux (20), au moins une nervure de renfort (9) ou plusieurs nervures de renfort (9) sont disposées selon un angle, en particulier transversalement, par rapport au bord latéral (20) du corps (2) et rabattues à partir d'une paroi latérale (6) vers l'autre paroi latérale (6) par-dessus le bord latéral (20).

8. Machine de travail selon une des revendications 1 à 6, **caractérisée en ce que** respectivement au moins une nervure de renfort (9) s'étend d'une nervure annulaire de chacune des parois latérales (6) respectivement jusqu'à une nervure annulaire (18) de sa paroi latérale voisine (6).

9. Machine de travail selon une des revendications 1 à 8, **caractérisée en ce qu'**au moins un coin extérieur (21), de préférence plusieurs coins extérieurs (21), plus préférentiellement tous les coins extérieurs (21), du corps (2) dans lesquels au moins trois parois latérales (6) sont contiguës les unes aux autres sont entourés au moyen d'au moins une nervure de renfort (9) qui est conçue en forme de nervure d'angle fermée en soi (22).

10. Machine de travail selon une des revendications 1 à 9, **caractérisée en ce que**, dans des zones des nervures de renfort (9), une épaisseur de paroi (10) du corps (2) est égale à au moins 120 %, de préférence à au moins 200 %, plus préférentiellement à au moins 280 %, d'une épaisseur de paroi (11) du corps (2) à l'extérieur des zones des nervures de renfort (9).

11. Machine de travail selon une des revendications 1 à 11, **caractérisée en ce que** le corps
• possède une épaisseur de paroi (10) du corps (2) dans la zone d'une nervure de renfort (9) de 6 mm - 14 mm, et/ou
• possède une largeur (13) de nervure de renfort mesurée transversalement à un axe longitudinal (12) d'une nervure de renfort respective (9) d'au moins 10 mm, et/ou
• possède une épaisseur de paroi (11) du corps (2) dans des zones à l'extérieur des nervures de renfort (9) de 3 mm - 7 mm.

12. Procédé de conception d'un réservoir (1) pour la conservation d'un liquide, en particulier d'un carburant liquide, pour une machine de travail agricole selon une des revendications précédentes, incluant les étapes de procédé suivantes :
a) on établit un modèle virtuel (25) d'un corps (2) du réservoir (1), le corps (2) comportant une pluralité de parois latérales (6) qui entourent conjointement un espace intérieur (7) du réservoir (1).
b) Un état de sollicitation standard ainsi que des conditions de conservation sont prescrits au modèle virtuel (25), l'état de sollicitation standard prévoyant au moins un remplissage complet de l'espace intérieur (7) avec un liquide ainsi qu'une sollicitation de l'espace intérieur (7) avec une pression intérieure.
c) Une optimisation topologique est effectuée sur le modèle (25) au moyen d'une analyse par éléments finis dans l'état de sollicitation standard ainsi que dans les conditions de conservation.
d) Sur la base du résultat de l'optimisation topologique, des nervures de renfort (9) sont disposées sur le corps (2), au moins une paroi latérale (6), de préférence plusieurs parois latérales (6), plus préférentiellement toutes les parois latérales (6) comportant dans leur zone centrale (17) au moins une nervure de renfort (9) qui est conçue en forme de nervure annulaire elliptique fermée en soi (18).

13. Procédé selon la revendication 12, **caractérisé en ce qu'**une analyse par éléments finis est ensuite effectuée sur le réservoir virtuel (1) ainsi optimisé, et l'agencement des nervures de renfort (9) sur le corps (2) est corrigé jusqu'à ce que le corps (2) réponde aux exigences de résistance mécanique et de rigidité.
